Europäisches Patentamt

(19) **European Patent Office**

**Office européen des brevets**

(11) Numéro de publication : **0 010 726**
**B1**

(12) **FASCICULE DE BREVET EUROPÉEN**

(45) Date de publication du fascicule du brevet :
**05.10.83**

(21) Numéro de dépôt : **79104108.0**

(22) Date de dépôt : **23.10.79**

(51) Int. Cl.³ : **H 04 Q 11/04**

(54) **Commutateur spatial multiplex.**

(30) Priorité : **30.10.78 FR 7830715**

(43) Date de publication de la demande :
**14.05.80 Bulletin 80/10**

(45) Mention de la délivrance du brevet :
**05.10.83 Bulletin 83/40**

(84) Etats contractants désignés :
**BE CH DE FR GB IT LU NL SE**

(73) Titulaire : **COMPAGNIE INDUSTRIELLE DES TELE-COMMUNICATIONS CIT-ALCATEL S.A. dite:**
**12, rue de la Baume**
**F-75008 Paris (FR)**

(72) Inventeur : **Le Dieu, Bernard**
**Rue de Keraisam**
**F-22700 Perros Guirec (FR)**
Inventeur : **Thiebaut, Georges**
**Coat Gourhant**
**Louannec F-22700 Perros Guirec (FR)**

(74) Mandataire : **Weinmiller, Jürgen et al**
**Zeppelinstrasse 63**
**D-8000 München 80 (DE)**

(56) Documents cités :
FR A 2 040 005
FR A 2 341 999

BELL SYSTEM TECHNICAL JOURNAL, vol. 52, no 6, juillet-août 1973, New York (US) KRUPP et al. : « Switching Networks of Planar Shifting Arrays », pages 991-1006

COMMUTATION & ELECTRONIQUE, no 54, juillet 1976, Paris (FR) HENRION et al. « Utilisation de la technologie C-MOS en commutation temporelle », pages 69-82

INTERNATIONAL ZURICH SEMINAR ON DIGITAL COMMUNICATIONS, mars 1976 Zurich (CH) PFANNENSCHMIDT : « Limitation of Transmission rate in High-Speed TDM-Switching Networks using Schottky-TTL Circuit Technology », pages C 3.1 a C 3.6

(56) Documents cités :
IEEE INTERNATIONAL CONFERENCE ON COMMUNICATIONS, juin 1977, New York (US) BIESZCZAD et al. « No 3 EAX Network and Master Clock », pages 27.2-199 à 27.2-203

INTERNATIONAL ZURICH SEMINAR ON DIGITAL COMMUNICATIONS, mars 1978 Zürich (CH) CHARRANSOL et al. « Development of a Time Division Switching Network usable in a very large range of capacities », pages B6.1 à B6.6

Jouve, 18, rue St-Denis, 75001 Paris, France

## Commutateur spatial multiplex

L'invention concerne un commutateur spatial multiplex pour réseau de connexion à division du temps et à modulation par impulsions codées (MIC) ; de tels réseaux de connexion permettent de connecter un intervalle de temps récurrent d'un multiplex entrant à un intervalle de temps récurrent quelconque d'un multiplex sortant, lesdits multiplex étant synchrones et en phase et ayant des trames identiques comportant chacune un certain nombre de voies temporelles.

L'invention s'applique plus particulièrement aux réseaux de connexion de type temporel-spatial-temporel, c'est-à-dire ayant au moins un étage spatial compris entre deux étages temporels ; l'invention s'applique également à tout type de réseau de connexion symétrique (TST, TSSST, STS etc).

On connaît par le brevet Français 2 224 961 des réseaux de connexion du type TST ou TSSST, c'est-à-dire comportant un étage temporel d'entrée et un étage temporel de sortie, encadrant un ou plusieurs étages spatiaux.

Chaque étage temporel d'entrée et de sortie est constitué de commutateurs temporels, chaque étage spatial étant constitué de commutateurs spatiaux. Chaque commutateur temporel de l'étage d'entrée est relié par des multiplex à chaque commutateur spatial de l'étage spatial qui le suit, et chaque commutateur temporel de l'étage de sortie est relié par des multiplex à chaque commutateur spatial de l'étage qui le précède.

Dans une structure TST il n'y a qu'un étage spatial dont chaque commutateur est relié à chacun des commutateurs temporels d'entrée et de sortie. Dans une structure TSSST, l'étage spatial central est compris entre deux étages spatiaux ; chaque commutateur spatial de cet étage spatial central est relié à chacun des commutateurs spatiaux des étages spatiaux qui l'encadrent.

D'une manière générale, un étage ou un commutateur spatial multiplex à p entrées et q sorties réalise la connexion, en temps réel, d'une voie d'entrée i portée par un quelconque des multiplex d'entrée vers la voie de sortie i d'un quelconque des multiplex de sortie. En d'autres termes, chaque voie étant constituée par un octet, cela signifie que les octets à connecter sont prisonniers de leur numéro de voie temporelle et ne peuvent que changer de multiplex ; l'étage spatial fonctionne donc en alignement de temps, puisqu'il n'y a pas changement de voie temporelle, mais simplement aiguillage d'une voie d'un multiplex d'entrée vers la voie de même numéro de l'un quelconque des multiplex de sortie. Classiquement la réalisation d'un commutateur spatial multiplex se fait au moyen de q ensembles de portes « ET OU ». Chaque ensemble de portes « ET-OU » comporte p portes ET à deux entrées, une entrée de chacune des portes ET étant reliée à un multiplex d'entrée, et l'autre entrée recevant un signal d'adressage d'une mémoire de commande commune à toutes les portes ET d'un ensemble ; les p sorties des portes ET d'un ensemble sont reliées chacune à une entrée de la porte OU dudit ensemble, la sortie de la porte OU étant reliée à un multiplex. Ainsi, si l'on veut connecter à l'instant de la voie i le multiplex d'entrée 1 sur le multiplex de sortie q il suffit d'ouvrir la première porte ET du qième ensemble, porte qui est reliée au multiplex d'entrée 1, à l'instant où la voie i est présente sur le multiplex d'entrée 1.

Dans un tel commutateur spatial multiplex la mémoire de commande débite des adresses de manière séquentielle et il est nécessaire d'utiliser des registres tampons pour adresser simultanément les portes ET des q ensembles de portes « ET-OU ».

Ces registres augmentent notablement le prix de la mémoire de commande, et son encombrement. A cela il s'ajoute le fait que les portes « ET-OU » sont actuellement limitées à seize entrées, donc à seize multiplex, ce qui oblige à grouper des portes « ET-OU » pour constituer un ensemble permettant de dépasser la capacité de seize multiplex.

Par ailleurs les réseaux de connexion de type TST, TSST, TSSST etc... utilisés dans la pratique présentent un certain blocage.

La réduction du taux de blocage d'un réseau de connexion, et éventuellement sa suppression, nécessite un plus grand nombre de commutateurs spatiaux multiplex, d'où un encombrement et un coût plus important.

Pour un central de 8 000 abonnés par exemple, un réseau de connexion TST comporte trente deux commutateurs temporels à l'étage d'entrée et autant à l'étage de sortie, chaque commutateur temporel d'entrée étant relié à huit multiplex entrants de trente deux voies par trame, et chaque commutateur temporel de sortie étant relié à huit multiplex sortants de trente deux voies par trame. L'étage spatial est une matrice carrée, trente deux par trente deux, c'est-à-dire qu'elle est reliée en entrée à chaque commutateur de l'étage d'entrée, et en sortie à chaque commutateur de l'étage de sortie ; la matrice est constituée de huit sous-matrices reliées chacune par un multiplex à chaque commutateur des étages d'entrée et de sortie.

En sortie de chaque commutateur temporel d'entrée on trouve huit multiplex de trente deux voies affectés chacun à une sous-matrice de l'étage spatial ; en entrée de chaque commutateur temporel de sortie on trouve huit multiplex de trente deux voies affectés chacun à une sous-matrice de l'étage spatial. Il n'y a commutation spatiale que sur des multiplex affectés à la même sous-matrice. Cette organisation permet d'effectuer la commutation spatiale à des vitesses relativement peu élevées, 2 Megabits/seconde.

Le réseau ainsi constitué présente un taux de blocage relativement important de $5,4 \cdot 10^{-2}$ pour une occupation de 0,85 erlang. Pour diminuer le blocage il est bien connu qu'il faut augmenter l'étage spatial, c'est-à-dire le nombre de matrices, ce qui outre l'augmentation de volume amène également à réaliser un étage spatial de capacité très importante, donc de réalisation difficile, et le coût de l'étage spatial en est considérablement augmenté.

Un second exemple est celui d'un central pour 60 000 abonnés dans lequel le réseau de connexion est du type T S1 S2 S3 T ; les étages temporels d'entrée et de sortie sont constitués chacun de cent vingt huit commutateurs temporels reliés chacun, pour l'étage d'entrée à seize multiplex entrants de trente deux voies chacun, et pour l'étage de sortie à seize multiplex sortants de trente deux voies chacun. Le premier étage spatial comporte trente deux matrices spatiales « quatre par quatre » c'est-à-dire ayant quatre entrées et quatre sorties, chaque entrée étant reliée à un commutateur d'entrée et chaque sortie à une matrice du second étage spatial lequel comporte quatre matrices trente deux par trente deux. Chaque matrice du second étage spatial est reliée à une sortie de chacune des matrices du premier étage spatial. Chaque matrice est reliée en sortie à chacune des matrices du troisième étage spatial lequel comporte trente deux matrices « quatre par quatre ». Chaque sortie d'une matrice du troisième étage spatial est reliée à un commutateur temporel de l'étage de sortie.

Un tel réseau présente un blocage moyen de $5 \cdot 10^{-3}$ pour une occupation de 0,85 erlang.

Si l'on désire diminuer le blocage de ce type de réseau de connexion, il faut changer de type de matrices aux premier et troisième étages spatiaux, et augmenter corrélativement le nombre des matrices du second étage spatial. Avec trente deux matrices « quatre par sept » au premier étage spatial S1, trente deux matrices « sept par quatre » au troisième étage spatial S3 et sept matrices « trente deux par trente deux » au second étage spatial S2 le blocage moyen est de l'ordre de $1 \cdot 10^{-5}$ pour une occupation de 0,85 erlang, ce qui ne présente pas un gain très important ; par contre ce gain sur le blocage entraîne une augmentation importante de l'encombrement et du coût du matériel.

On connaît également, par le document FR-A 2 341 999, un commutateur assurant à la fois la commutation temporelle et la commutation spatiale des voies entre les multiplex entrants et les multiplex sortants. Un tel commutateur comporte un convertisseur série-parallèle relié en entrée à des multiplex entrants, une mémoire de parole ayant autant de mots qu'il y a de voies temporelles pour l'ensemble des multiplex entrants, un convertisseur parallèle-série relié à des multiplex sortants et une mémoire de commande comportant autant de mots que la mémoire de parole à laquelle elle est reliée à huit multiplex entrants ayant chacun trente deux voies par trame.

Chaque commutateur de ce type pouvant effectuer une commutation temporelle et une commutation spatiale, un commutateur spatial peut assurer uniquement une commutation spatiale. Cependant dans les centraux téléphoniques le nombre de multiplex entrants est très supérieur à huit et généralement égal à trente deux ou à un multiple de trente deux.

Comme indiqué précédemment, l'étage spatial d'un central de 8 000 abonnés par exemple est une matrice carrée de trente deux multiplex entrants et de trente deux multiplex sortants. Un tel étage spatial nécessiterait donc un commutateur du type connu par le document FR-A 2 341 999 ayant une mémoire de parole de 1 024 mots et une mémoire de commande également de 1 024 mots. Comme dans un tel commutateur on doit écrire et lire la mémoire pendant un temps élémentaire, il faut multiplier par quatre les vitesses d'écriture et de lecture du commutateur ayant huit multiplex entrants et il est connu que pratiquement il est difficile de réaliser des commutateurs travaillant à une vitesse supérieure à 10 MHz.

L'invention a pour but un commutateur spatial multiplex, utilisable dans les réseaux de connexion comportant au moins un étage spatial, plus économique que le commutateur connu, et dans lequel pour un même nombre de multiplex entrants, la mémoire de parole a une capacité plus faible, et fonctionne à vitesse moitié, ce qui contribue également à réduire le coût d'un commutateur spatial de grande capacité.

L'invention a également pour but un commutateur spatial multiplex permettant de réduire le taux de blocage d'un réseau de connexion sans augmenter le nombre de commutateurs d'un étage spatial.

L'invention a pour objet un commutateur spatial multiplex relié en entrée et en sortie à un même nombre de multiplex à division dans le temps, lesdits multiplex étant synchrones et en phase et ayant des trames identiques comportant chacune un certain nombre de voies temporelles, comportant un convertisseur série-parallèle relié en entrée aux multiplex entrants, une mémoire de parole reliée en entrée au convertisseur série-parallèle, un convertisseur parallèle-série relié en entrée à la mémoire de parole et en sortie aux multiplex sortants, et une mémoire de commande comportant un nombre de mots égal au produit du nombre de multiplex entrants par le nombre de voies temporelles d'une trame, ladite mémoire de commande commandant la lecture de la mémoire de parole, caractérisé par le fait que la mémoire de parole est constituée par deux mémoires dont l'une est en écriture lorsque l'autre est en lecture, que chaque mémoire est reliée en entrée au convertisseur série-parallèle et en sortie à une porte ET elle-même reliée en sortie à une porte OU dont la sortie est reliée au convertisseur parallèle-série, que chaque mémoire comporte un nombre de mots égal au produit du nombre de multiplex entrants par un sous-multiple du nombre de voies d'une trame, ledit sous multiple étant inférieur au nombre de voies d'une trame, que les temps d'écriture et de lecture (Ti) de chaque mémoire sont égaux au temps correspondant à un nombre de voies temporelles égal audit sous-multiple, et que la mémoire de commande est reliée à chacune des mémoires.

Dans un commutateur spatial multiplex conforme à l'invention, on a l'octet i du premier multiplex entrant mémorisé dans le premier mot de la mémoire, l'octet i du deuxième multiplex mémorisé dans le deuxième mot de la mémoire..., l'octet i du p ième multiplex mémorisé dans le p ième mot de la mémoire ; pour réaliser le brassage spatial on effectue une lecture des mots de la mémoire suivant un ordre donné par une mémoire de commande associée aux multiplex de sortie. Si l'on veut connecter par exemple le premier multiplex d'entrée au q ième multiplex de sortie, le q ième mot de la mémoire de commande contiendra l'information 1, c'est-à-dire l'adresse du premier mot de la mémoire. Bien entendu la mémoire de commande peut commander la mémorisation à l'écriture, la lecture se faisant de façon ordonnée.

L'invention sera mieux comprise à l'aide d'exemples de réalisation décrits et représentés par les dessins annexés dans lesquels :

la figure 1 représente un commutateur spatial multiplex de l'invention dans le cas où le sous-multiple du nombre de voies d'une trame est égal à 1

la figure 2 représente un commutateur spatial multiplex de l'invention dans le cas où le sous-multiple du nombre de voies d'une trame est égal à X

la figure 3 représente un réseau de connexion TST faisant application du commutateur spatial multiplex de la figure 2

la figure 4 représente un réseau de connexion T 3S T faisant application des commutateurs spatiaux multiplex des figures 1 et 2.

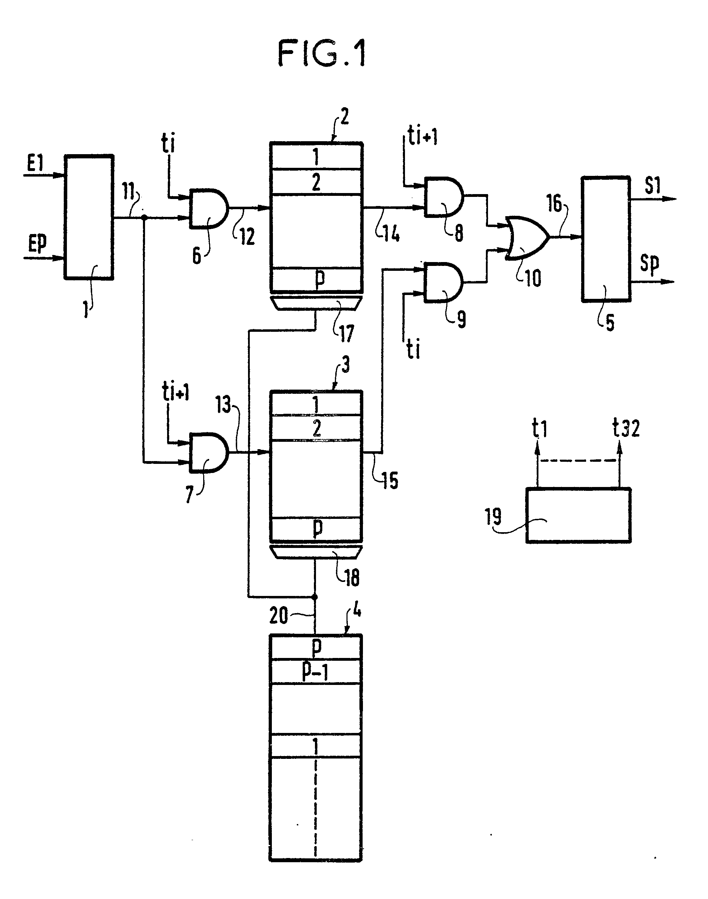

Dans la figure 1 qui représente un commutateur spatial multiplex conforme à l'invention, 1 est un dispositif de conversion série-parallèle, 2 et 3 sont des mémoires, 4 est une mémoire de commande, 5 est un dispositif de conversion parallèle-série, 6, 7, 8, 9 sont des groupes de huit portes ET, 10 est un groupe de huit portes OU.

Le dispositif de conversion série-parallèle 1 est relié en entrée à p multiplex entrants E1, ...Ep. Le dispositif de conversion parallèle-série 5 est relié en sortie à p multiplex sortants S1, ...Sp. Les multiplex entrants et sortants comportent chacun, par exemple, trente deux voies temporelles dans une trame de 125 micro-secondes. La sortie du dispositif de conversion série-parallèle 1 est reliée par un multiplex 11, constitué de huit liaisons en parallèle, d'une part au groupe de portes ET 6 et d'autre part au groupe de portes ET 7. La sortie du groupe de portes ET 6 est reliée par un multiplex 12 à la mémoire de parole 2 ; la sortie du groupe de portes ET 7 est reliée par un multiplex 13 à la mémoire 3. Les multiplex 12 et 13 sont constitués chacun de huit liaisons en parallèle.

Les mémoires 2 et 3 sont reliées aux groupes de portes ET 8, 9, respectivement, par un multiplex 14, 15 respectivement, ces multiplex étant constitués de huit liaisons en parallèle. Les sorties des groupes de portes ET 8 et 9 sont reliées à une entrée du groupe de portes OU 10, respectivement, la sortie du groupe de portes OU étant reliée, par un multiplex 16 constitué de huit liaisons en parallèle, à l'entrée du dispositif de conversion parallèle-série 5. La mémoire de commande 4 est reliée à chacun des circuits d'adressage de lecture 17 et 18 des mémoires 2 et 3 par une ligne d'adressage 20.

Une base de temps 19 délivre les temps de voies temporelles t1... t32 correspondants aux trente deux voies temporelles des multiplex entrants E1... Ep et sortants S1... Sp. Les groupes de portes ET 6 et 9 ont chacun une entrée qui reçoit un temps ti de la base de temps 19, les groupes de portes ET 7 ET 8 recevant sur une entrée le temps ti + 1, de sorte qu'une mémoire est en écriture pendant que l'autre mémoire est en lecture.

Les multiplex 11, 12, 13, 14, 15, 16 sont constitués chacun de huit liaisons en parallèle, chaque liaison acheminant un élément binaire d'un octet constituant une voie temporelle ; de cette manière chaque multiplex achemine, pendant un temps ti d'une voie temporelle, les p voies temporelles i des p multiplex entrants.

Dans cette figure 1 le sous-multiple du nombre de voies d'une trame est égal à 1, et les mémoires 2 et 3 ont chacune une capacité de p mots, chaque mot correspondant à un octet d'une voie temporelle ; les p mots sont inscrits dans l'ordre, c'est-à-dire que dans la mémoire 2 on trouve dans le mot 1 la voie temporelle i du multiplex entrant E1, dans le mot 2 la voie temporelle i du multiplex entrant E2, ..., dans le mot p la voie temporelle i du multiplex entrant Ep ; cet ordre est le même dans la mémoire 3, mais il correspond à la voie temporelle i + 1, l'écriture dans les mémoires 2 et 3 ayant lieu aux temps ti et ti + 1 respectivement.

La mémoire de commande 4 a une capacité de 32p mots, correspondant à la totalité des voies temporelles d'une trame pour les p multiplex entrants, chaque mot contenant le numéro d'un multiplex entrant, un ensemble de p mots correspondant à un numéro de voie temporelle de tous les multiplex.

Dans la figure 1, où l'on a représenté à titre d'exemple p mots de la mémoire de commande, ces p mots étant ceux d'une même voie temporelle, i + 1 par exemple, le premier mot contient le numéro p du multiplex entrant Ep, le deuxième mot contient le numéro p − 1 du multiplex entrant Ep − 1, ..., le p ième mot contient le numéro 1 du multiplex entrant E1. La mémoire de commande est lue cycliquement, la lecture des mémoires s'effectuant selon l'ordre donné par la mémoire de commande 4 dont les mots successifs, qui contiennent les numéros p, p − 1, ..., permettent respectivement un aiguillage vers les multiplex sortants S1, S2, ... Sp.

Au temps ti on inscrit dans l'ordre, dans la mémoire 2, les p voies temporelles i des p multiplex entrants ; pendant ce même temps on lit dans la mémoire 3 les p mots correspondants aux voies temporelles i − 1 inscrites au temps ti − 1, au temps ti + 1 la mémoire 2 est lue, et l'inscription se fait dans la mémoire 3. Avec l'exemple choisi pour la mémoire de commande, la voie temporelle i du multiplex entrant Ep est aiguillée vers le multiplex sortant S1, la voie temporelle i du multiplex entrant Ep − 1 est aiguillée vers le multiplex sortant S2 ..., la voie temporelle i du multiplex entrant E1 est aiguillée vers le multiplex sortant Sp ; bien entendu l'ordre d'aiguillage est différent pour chacune des trente deux voies temporelles d'une trame. Sur le multiplex 11, en sortie du dispositif de conversion série parallèle 1, on trouve successivement les voies temporelles de même numéro dans l'ordre 1, 2, ...p des multiplex entrants E1, E2 ...Ep ; sur le multiplex de sortie 16 on trouve, d'après l'exemple décrit pour la mémoire de commande 4, ces voies temporelles dans l'ordre inverse p, p − 1, ...1 affectées respectivement aux multiplex de sortie S1, ...Sp − 1, Sp, au temps ti + 1 d'après l'exemple de la figure 1. Pour les voies temporelles suivantes, celles présentées aux temps ti + 1, ti + 2, etc en entrée d'une mémoire, la distribution de sortie pourra être totalement différente suivant les informations données par la mémoire de commande 4.

Pratiquement on choisira p = 32, de sorte que la mémoire de commande comporte 1 024 mots de 5 éléments binaires chacun, puisque chaque multiplex comporte 32 voies temporelles par trame.

Pour la réalisation des mémoires on utilise des mémoires du commerce qui comportent 256 mots de 8 eb (élément binaire), c'est-à-dire qui offrent une capacité mot huit fois supérieure à celle strictement nécessaire. Pour la mémoire de commande on utilise également couramment des mémoires ayant une capacité de 256 mots ou multiple de 256, les mots ayant généralement 4 ou 8 eb ; comme la mémoire de commande nécessite seulement des mots de 5 eb pour adresser 32 mots, il y a pratiquement 3 eb non utilisés. Cette constatation amène à concevoir pour le commutateur spatial multiplex, un fonctionnement tel que l'on utilise les capacités qu'il offre tant en mémoire qu'en mémoire de commande.

Les mémoires ayant par exemple une capacité huit fois supérieure à celle nécessaire selon le commutateur spatial de la figure 1, il est possible de mémoriser huit fois plus de mots, c'est-à-dire huit fois plus de voies temporelles. Le nombre de voies temporelles à aiguiller dans une trame reste toujours de 1 024 pour 32 multiplex entrants ; mais chaque mot de la mémoire de commande ayant 8 eb, dont 5 eb seulement sont nécessaires pour aiguiller une voie sur l'un des trente deux multiplex sortants, les 3 eb disponibles peuvent être utilisés pour choisir, dans une mémoire, une voie temporelle parmi les huit voies temporelles mémorisées de chaque multiplex entrant. De cette manière on effectue une commutation temporelle à l'intérieur d'un secteur de huit voies

temporelles.

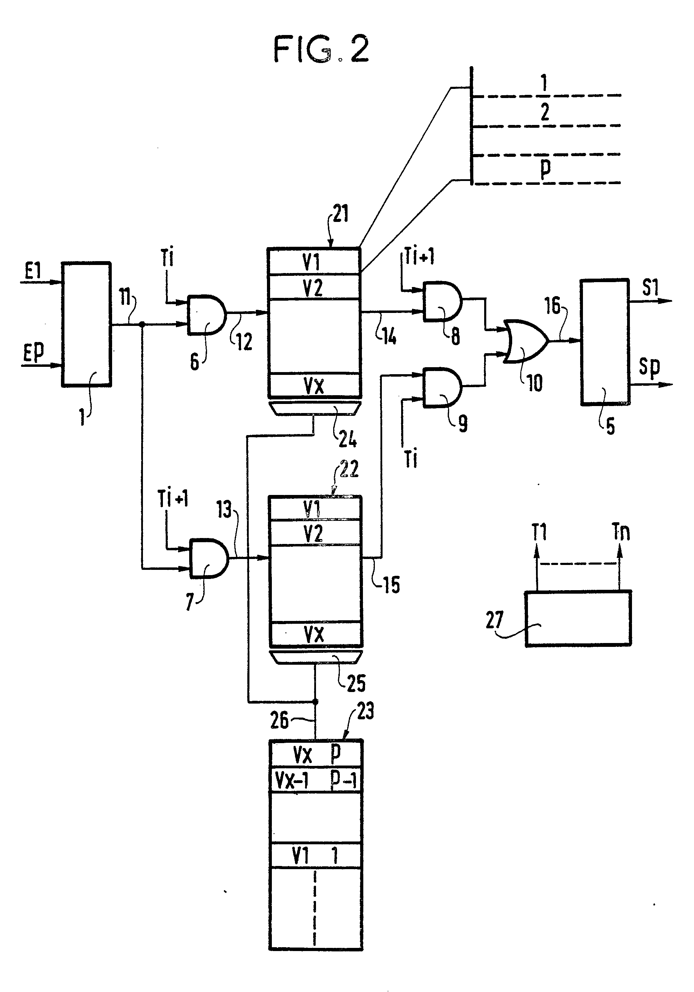

La figure 2 illustre un commutateur spatial multiplex offrant une possibilité de commutation temporelle dans un secteur de x voies temporelles ; sa structure est la même que celle du commutateur de la figure 1 et les mêmes repères y ont même signification.

Dans cette figure, 1 est un dispositif de conversion série-parallèle, 21 et 22 sont des mémoires, 23 est une mémoire de commande, 5 est un dispositif de conversion parallèle-série, 6, 7, 8, 9 sont des groupes de huit portes ET, 10 est un groupe de huit portes OU.

Le dispositif de conversion série-parallèle 1 est relié en entrée à p multiplex entrants E1, ...Ep. Le dispositif de conversion parallèle-série 5 est relié en sortie à p multiplex sortants S1, ...Sp. Les multiplex entrants et sortants comportent chacun, par exemple, trente deux voies temporelles dans une trame de 125 microsecondes. La sortie du dispositif conversion série-parallèle 1 est reliée par un multiplex 11, constitué de huit liaisons en parallèle, d'une part au groupe de portes ET 6 et d'autre part au groupe de portes ET 7. La sortie du groupe de portes ET 6 est reliée par un multiplex 12 à la mémoire 21 ; la sortie du groupe de portes ET 7 est relié par un multiplex 13 à la mémoire 22. Les multiplex 12 et 13 sont constituées chacun de huit liaisons en parallèle.

Les mémoires 21 et 22 sont reliées aux groupes de portes ET 8, 9, respectivement, par un multiplex 14, 15, respectivement, ces multiplex étant constitués de huit liaisons en parallèle. Les sorties des groupes de portes ET 8 et 9 sont reliées à une entrée du groupe de portes OU 10, respectivement, la sortie du groupe de portes OU étant reliée, par un multiplex 16 constitué de huit liaisons en parallèle, à l'entrée du dispositif de conversion parallèle-série 5. La mémoire de commande 23 est reliée à chacun des circuits d'adressage de lecture 24 et 25 des mémoires 21 et 22 par une ligne d'adressage 26.

Une base de temps 27 délivre des temps T1, ..., Tn, ayant chacun une durée correspondant à x voies temporelles, c'est-à-dire à un secteur de x voies temporelles, une trame de trente deux voies temporelles étant divisée en n secteurs de x voies temporelles, chaque mémoire 21 et 22 ayant une capacité de xp mots de huit éléments binaires chacun soit x voies temporelles par multiplex entrant E1, ..., Ep ; x étant un sous-multiple des trente deux voies d'une trame différent de 1.

La mémoire de commande 23 a une capacité de 32p mots chaque mot contenant le numéro d'un multiplex entrant et le numéro d'une voie temporelle du secteur de x voies temporelles dudit multiplex entrant. Les groupes de portes ET 6 et 9 ont chacun une entrée qui reçoit le temps Ti de la base de temps 27, les groupes de portes ET 7 et 8 recevant sur une entrée le temps Ti + 1, de sorte qu'une mémoire est en écriture pendant que l'autre mémoire est en lecture.

Les multiplex 11, 12, 13, 14, 15, 16 sont constitués chacun de huit liaisons en parallèle, chaque liaison acheminant un élément binaire d'un octet constituant une voie temporelle ; de cette manière chaque multiplex achemine pendant un temps Ti les xp voies temporelles d'un secteur des p multiplex entrants. Les mémoires 21, 22 ont chacune une capacité de xp mots et sont divisées en x zones, une par voie temporelle d'un secteur, les zones étant repérées V1, V2, ...Vx, chaque zone comportant p mots dans lesquels sont inscrits dans l'ordre les huit éléments binaires des voies temporelles correspondantes des p multiplex entrants. La zone V1 de la mémoire 21, qui correspond par exemple à la première voie du secteur considéré, contient donc dans l'ordre, la voie temporelle de même numéro des multiplex entrants E1, E2, ..., Ep ; il en est de même pour les zones Ve, ..., Vx, les x voies temporelles étant inscrites au temps Ti. L'ordre d'écriture dans la mémoire 22 est le même, mais il correspond au temps Ti + 1.

La mémoire de commande 23 a une capacité de 32p mots ; dans la figure 2 on a représenté, à titre d'exemple, p mots de la mémoire de commande qui vont lire, au temps Ti + 1, p mots de la mémoire 21 ; chaque mot de la mémoire de commande comporte le numéro de la zone à lire dans la mémoire 21 et le numéro du mot dans cette zone ; on trouve ainsi dans le premier mot de la mémoire de commande la zone Vx et le numéro p, dans le deuxième mot la zone Vx − 1 et le numéro p − 1, ..., dans le dernier mot la zone V1 et le numéro 1 ; la lecture de ces p mots donnera en sortie, sur les multiplex sortants S1, S2, ..., Sp la première voie d'un secteur et on aura : sur le multiplex sortant S1 la voie x du multiplex entrant Ep, sur le multiplex sortant S2 la voie x − 1 du multiplex entrant Ep − 1, ..., sur le multiplex sortant Sp la voie 1 du multiplex entrant E1, ceci étant bien entendu un exemple.

La mémoire de commande 23 commandera ensuite la lecture de p autres mots de la mémoire 21, toujours pendant le temps Ti − 1 ; au total la mémoire de commande adressera pendant le temps Ti + 1, x fois la mémoire 21, à l'aide de p mots chaque fois ; bien évidemment à chaque adressage les p mots contiendront des ordres de lecture différents de manière à ce que pendant le temps Ti + 1, la totalité des x p mots de la mémoire 21 soient lus. Pendant le temps Ti + 1 il y a écriture de x p mots dans la mémoire de parole 23, la lecture ayant lieu au temps Ti + 2.

La mémoire de commande contient donc x p mots par secteur ; une trame étant constituée de 32 mots il y a n secteurs par trame, et la capacité de la mémoire de commande est de n x p mots, avec n x = 32.

Dans ce qui précède on a supposé à titre d'exemple que les mémoires 21 et 22 étaient commandées à la lecture, l'écriture se faisant de manière ordonnée ; il est bien entendu que l'écriture peut être commandée par la mémoire de commande 23, la lecture se faisant alors de manière ordonnée c'est-à-dire dans l'ordre des mots ; les mémoires seraient toujours divisées en zones V1, V2, ..., Vx, chaque zone correspondant à une voie temporelle d'un secteur et comprenant p mots ; chaque mot de la mémoire de commande contiendrait le numéro d'une zone et le numéro d'un mot dans ladite zone qui correspondrait à un multiplex sortant. Ces deux manières de commander une mémoire sont classiques et bien connues de l'homme de l'art.

Le commutateur spatial multiplex de la figure 2 est donc un commutateur à brassage temporel limité, puisque le changement de voie temporelle ne peut s'effectuer qu'à l'intérieur d'un secteur. On trouve couramment, sur le marché, des mémoires de 256 mots de 8 éléments binaires ce qui permet de les utiliser pour les mémoires qui doivent mémoriser des mots de 8 éléments binaires. Si d'autre part on fixe à p = 32 le nombre de multiplex entrants et sortants, une mémoire peut mémoriser 8 voies temporelles de chaque multiplex entrant ; on a donc 4 secteurs de 8 voies temporelles dans une trame. La mémoire de commande devant comporter 32 × 32 = 1 024 mots, il faut 5 éléments binaires pour adresser les mémoires afin de donner l'adresse d'un multiplex parmi trente deux ; il faut également donner l'adresse d'une voie temporelle parmi huit, ce qui nécessite trois éléments binaires. Chaque mot de la mémoire de commande doit donc comporter huit éléments binaires, et l'on peut réaliser la mémoire de commande soit avec des mémoires à 256 mots de 8 éléments binaires, soit avec une mémoire de 1 024 mots de 8 éléments binaires. D'une manière générale on peut avoir un nombre de secteurs différent de quatre, à condition d'adapter la capacité des mémoires au nombre de voies temporelles à mémoriser, et d'avoir pour chaque mot de la mémoire de commande un nombre d'éléments binaires permettant de mémoriser le numéro d'une zone et le numéro du mot à adresser dans la zone de la mémoire, que les mémoires soient à commande à l'écriture ou à la lecture.

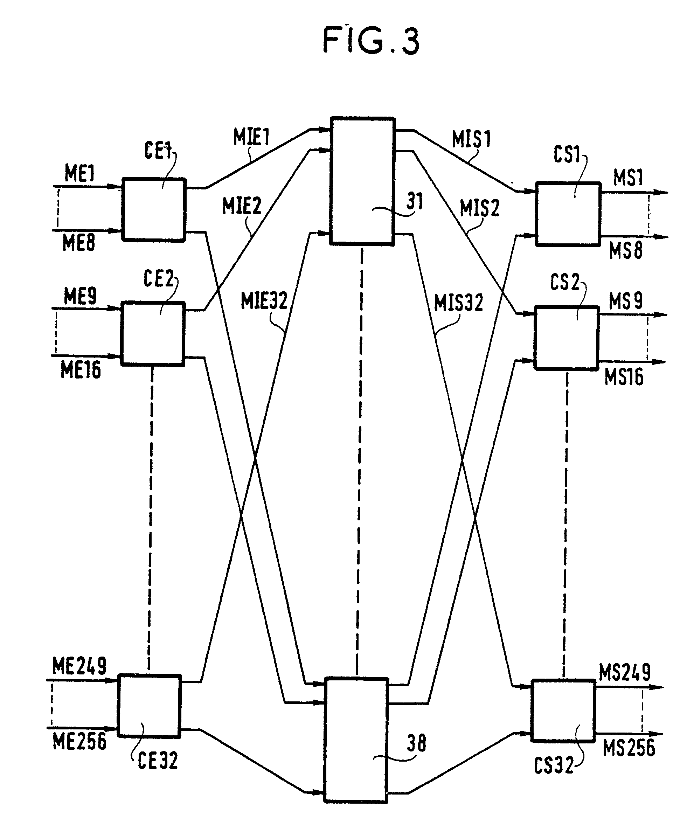

La figure 3 représente un exemple de réseau de connexion du type temporel-spatial-temporel, avec un étage spatial. L'étage temporel d'entrée est constitué de trente deux commutateurs temporels d'entrée CE1, CE2, ..., CE32, et l'étage temporel de sortie est constitué de trente deux commutateurs temporels de sortie CS1, CS2, ..., CS32. Chaque commutateur temporel d'entrée est relié en entrée à huit multiplex entrants, lesquels sont au nombre de deux cent cinquante six, ME1, ..., ME256. Chaque commutateur temporel de sortie est relié, en sortie à huit multiplex sortant, lesquels sont au nombre de deux cent cinquante six, MS1, ..., MS256. Les multiplex entrants et sortants ont chacun trente deux voies temporelles par trame.

L'étage spatial est une matrice 32 par 32 constituée de huit sous-matrices 31, ..., 38, reliées chacune en entrée par un multiplex intermédiaire entrant MIE1, MIE2, ..., MIE32, à la sortie de chacun des commutateurs temporels d'entrée ; chaque sous-matrice est du type représenté figure 2 dans laquelle les multiplex entrants E1, ..., Ep sont remplacés par les multiplex intermédiaires entrants MIE1, MIE2, ..., MIE32. Chacune des sous-matrices 31, ..., 38 est reliée en sortie, par trente deux multiplex intermédiaires sortants MIS1, MIS2, ..., MIS32, à chacun des trente deux commutateurs temporels de sortie ; ces multiplex intermédiaires sortants remplacent, dans la figure 2, les multiplex sortants S1, ..., Sp. Les commutateurs temporels d'entrée et de sortie ont chacun une capacité de 256 voies temporelles en supposant, ce qui est généralement le cas, que les multiplex entrants ME1, ..., ME256, et sortants, MS1, ..., MS256 sont constitués de trames à trente deux voies temporelles chacune. Si l'étage spatial était constitué de sous-matrices purement spatiales, c'est-à-dire n'ayant pas la possibilité d'effectuer un changement de voie temporelle entre l'entrée et la sortie des matrices, le réseau de la figure 3 présenterait un blocage relativement important de $5,4 \cdot 10^{-2}$ pour une occupation de 0,85 erlang. La diminution du blocage, nécessiterait, comme cela est bien connu, d'augmenter le nombre de sous-matrices de l'étage spatial, en introduisant également une expansion à la sortie des commutateurs temporels d'entrée. Outre l'augmentation de volume qu'une telle solution entraînerait, la réalisation d'un tel étage spatial de capacité plus importante serait plus difficile, et plus onéreuse.

En réalisant les sous-matrices de l'étage spatial avec des mémoires, et en effectuant un brassage temporel des voies temporelles d'un secteur de huit voies temporelles, comme cela a été décrit ci-dessus, le blocage du réseau de connexion représenté figure 3 devient inférieur à $2 \cdot 10^{-7}$ pour une occupation de 0,85 erlang.

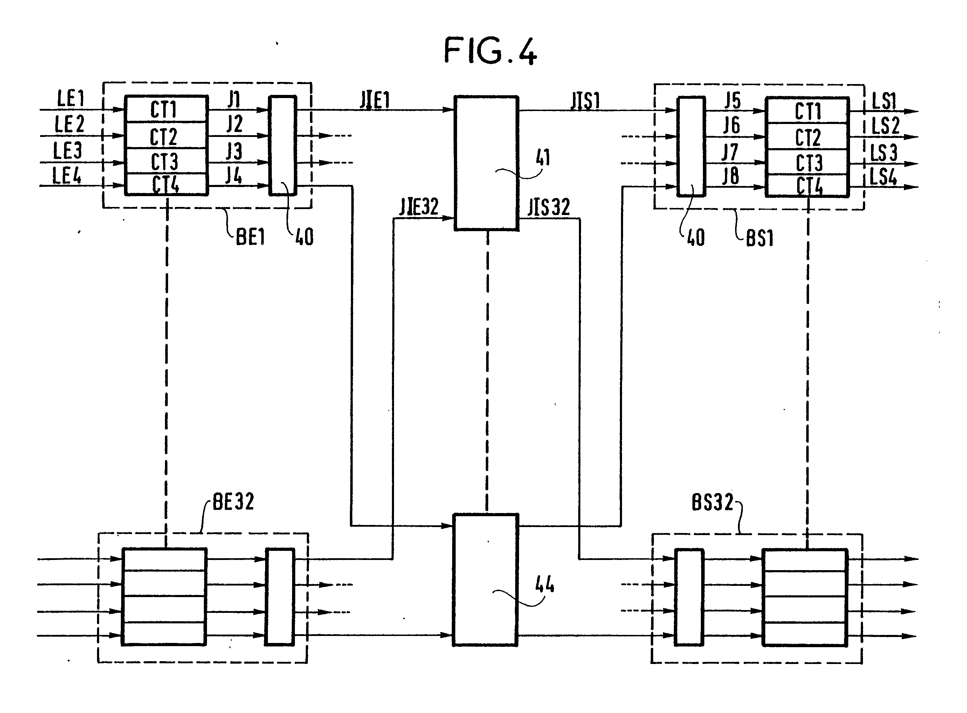

La Figure 4 représente un exemple d'un réseau de connexion de très grande capacité, du type temporel-spatial-spatial-spatial-temporel, c'est-à-dire ayant trois étages spatiaux entre deux étages temporels.

Dans cette figure BE1, ..., BE32, sont des blocs d'entrée et BS1, ..., BS32 sont des blocs de sortie. Les blocs d'entrée et de sortie sont identiques et ont chacun une capacité de 2 048 voies temporelles. Chaque bloc comporte quatre commutateurs temporels CT1 à CT4 d'une capacité de 512 voies temporelles chacun, et une matrice spatiale à mémoire 40 constituée de deux commutateurs spatiaux à mémoires du type représenté figure 1, c'est-à-dire sans possibilité de commutation temporelle. L'étage spatial central comprend quatre sous-matrices spatiales, 41 à 44 à mémoire et à brassage temporel limité, chaque sous-matrice étant constituée de seize commutateurs spatiaux à mémoire, du type représenté figure 2, c'est-à-dire permettant le brassage temporel des voies temporelles d'un secteur de huit voies temporelles.

Chaque commutateur temporel d'un bloc d'entrée est relié, en entrée à quatre lignes entrantes, LE1, LE2, LE3, LE4, respectivement constituées chacune par seize multiplex, soit au total soixante quatre multiplex par bloc d'entrée et 2 048 multiplex entrants pour les trente deux blocs d'entrée.

De même chaque commutateur temporel d'un bloc de sortie BS1, ..., BS32, est relié, en sortie, à quatre lignes sortantes LS1, LS2, LS3, LS4, respectivement, chaque ligne sortante étant constituée de seize multiplex ; il y a donc soixante quatre multiplex sortants en sortie de chaque bloc de sortie, soit au total 2 048 multiplex sortants pour les trente deux blocs de sortie.

Dans un bloc d'entrée, la sortie de chaque commutateur temporel est reliée par une jonction multiplex J1, J2, J3, J4, respectivement, à la matrice spatiale 40, chaque jonction multiplex étant constituée de seize multiplex à trente deux voies temporelles par trame. De manière plus précise, chaque commutateur spatial du type représenté figure 1 est relié par huit multiplex à chaque commutateur temporel.

Chaque sous-matrice spatiale 41 à 44 est reliée, en entrée, par une jonction entrante intermédiaire JIE1, ..., JIE32, à une sortie de chacun des trente deux blocs d'entrée ; chaque sous-matrice est également reliée en sortie, par une jonction sortante intermédiaire, JIS1, ..., JIS32, à une entrée de chacun des trente deux blocs de sortie ; chaque jonction intermédiaire, entrante ou sortante, est constituée de seize multiplex à trente deux voies par trame. D'une manière plus précise chaque jonction entrante intermédiaire est constituée de deux groupes de huit multiplex, chaque groupe provenant de chacun des commutateurs spatiaux d'une matrice spatiale 40 d'un bloc d'entrée ; chaque commutateur spatial multiplex d'une sous-matrice est relié à un multiplex de chaque jonction entrante intermédiaire ; de même chaque jonction sortante intermédiaire est constituée de deux groupes de huit multiplex, chaque groupe aboutissant à l'entrée d'un commutateur spatial d'une matrice 40 d'un bloc de sortie ; chaque jonction sortante intermédiaire est donc constituée par un multiplex sortant de chaque commutateur spatial multiplex.

Dans un bloc de sortie chaque sortie de la matrice spatiale 40 est reliée par une jonction multiplex J5, J6, J7, J8, respectivement, à l'entrée de chaque commutateur temporel, chaque jonction multiplex étant constituée de seize multiplex à trente deux voies temporelles par trame. De manière plus précise chaque jonction multiplex est constituée de deux groupes de huit multiplex, chaque groupe provenant d'un commutateur spatial de la matrice spatiale 40.

Dans le réseau de connexion de la figure 4 les matrices spatiales 40 des blocs d'entrée constituent le premier étage spatial et les matrices spatiales 40 des blocs de sortie constituent le troisième étage, les sous-matrices 41 à 44 constituant le second étage spatial.

Si les étages spatiaux étaient constitués de matrices et de sous-matrices purement spatiales, c'est-à-dire n'offrant pas la possibilité d'effectuer un changement de voie temporelle entre leurs entrées et leurs sorties, le réseau de connexion de la figure 4 aurait un blocage de $5 \cdot 10^{-3}$ pour un trafic de 0,85 erlang. La modification des matrices et des sous-matrices, ainsi que l'augmentation du nombre des sous-matrices pour abaisser le blocage, par exemple avec des matrices 4 par 7 dans les blocs d'entrée et 7 par 4 dans les blocs de sortie, et 7 sous-matrices 32 par 32 au second étage spatial, permettrait d'abaisser le blocage à $10^{-5}$ ; avec au second étage spatial des sous-matrices constituées de commutateur à mémoire et à brassage temporel limité, dans un secteur de huit voies temporelles, le blocage est inférieur à $10^{-8}$, toujours pour une occupation de 0,85 erlang. Le gain sur le blocage est important, et ceci non seulement sans qu'il ait été nécessaire d'augmenter le nombre des sous-matrices du second étage spatial, mais également sans avoir pratiquement augmenté le matériel utilisé pour la réalisation des sous-matrices. Autre avantage également, les trois étages spatiaux utilisent les mêmes types de matériel.

Le commutateur spatial multiplex trouve donc des applications dans tous les domaines où l'on doit effectuer une commutation spatiale et notamment dans les télécommunications ; une application importante est celle des réseaux de connexion et plus particulièrement, mais non exclusivement, les réseaux de connexion des centraux téléphoniques.

Bien entendu l'invention n'est pas limitée aux exemples de réalisation décrits et représentés et l'on pourra notamment utiliser pour les commutateurs spatiaux des mémoires ayant une capacité différente de celle mentionnée.

**Revendications**

1. Commutateur spatial multiplex relié en entrée et en sortie à un même nombre (p) de multiplex à division dans le temps, lesdits multiplex étant synchrones et en phase et ayant des trames identiques comportant chacune un certain nombre de voies temporelles, comportant un convertisseur série-parallèle (1) relié en entrée aux multiplex entrants (E1 − Ep), une mémoire de parole reliée en entrée au convertisseur série-parallèle, un convertisseur parallèle-série (5) relié en entrée à la mémoire de parole et en sortie aux multiplex sortants (S1 − Sp), et une mémoire de commande (4) comportant un nombre de mots égal au produit du nombre (p) de multiplex entrants par le nombre (32) de voies temporelles d'une trame, ladite mémoire de commande commandant la lecture de la mémoire de parole, caractérisé par le fait que la mémoire de parole est constituée par deux mémoires (2, 3) dont l'une est en écriture lorsque l'autre est en lecture, que chaque mémoire est reliée en entrée au convertisseur série-parallèle (1) et en sortie à une porte ET (8, 9) elle-même reliée en sortie à une porte OU (10) dont la sortie est reliée au convertisseur parallèle-série (5), que chaque mémoire (2, 3) comporte un nombre de mots égal au produit du nombre (p) de multiplex entrants par un sous-multiple (x) du nombre de voies d'une trame, ledit sous-multiple (x) étant inférieur au nombre de voies d'une trame, que les temps d'écriture et de lecture (Ti) de chaque mémoire sont égaux au temps correspondant à un nombre (x) de voies temporelles égal audit sous-multiple, et que la mémoire de commande est reliée à chacune des mémoires.

2. Commutateur spatial multiplex selon la revendication 1, caractérisé par le fait que chaque mémoire (2, 3) comporte autant de mots qu'il y a de multiplex entrants.

3. Commutateur spatial multiplex selon la revendication 1, caractérisé par le fait que le sous-multiple (x) du nombre de voies temporelles d'une trame est différent de 1, que chaque trame est divisée en secteurs comportant chacun un nombre de voies temporelles égal audit sous-multiple, que chaque mémoire (2, 3) est divisée en autant de zones (V1, Vx) qu'il y a de voies temporelles dans un secteur et que chaque zone contient autant de mots (1, p) qu'il y a de multiplex entrants, de manière à effectuer, en plus d'une commutation spatiale, une commutation temporelle entre toutes les voies temporelles mémorisées dans chaque mémoire.

**Claims**

1. A space multiplex switch connected at the input side and at the output side to an equal plurality (p) of time division multiplexes, said multiplexes being synchronized and in phase and having identical frames each comprising a certain number of time slots, comprising a series-to-parallel converter (1) the input of which is connected to the input multiplexes (E1 − Ep), a word memory, the input of which is connected to the series-to-parallel converter, a parallel-to-series converter (5) the input of which is connected to the word memory and the output of which is connected to the output multiplexes (S1 − Sp), and a control memory (4) comprising a number of words which is equal to the product of the number (p) of input multiplexes with the number (32) of time slots of a frame, said control memory controlling the read operation of the word memory, characterized in that the word memory is constituted by two memories (2, 3), one of which is writing when the other is reading, that each memory is connected by its input to the series-to-parallel converter (1) and by its output to an AND gate (8, 9), the output of which is connected to an OR gate (10), the output of which is connected to the parallel-to-series converter (5), that each memory (2, 3) comprises a number of words which is equal to the product of the number (p) of input multiplexes with a sub-multiple (x) of the number of slots of a frame, said sub-multiple (x) being lower than the number of slots of a frame, that the writing and reading times (Ti) of each memory are equal to the time corresponding to a number (x) of time slots equal to said sub-multiple, and that the control memory is connected to each of the memories.

2. A space multiplex switch according to claim 1, characterized in that each memory (2, 3) comprises as many words as there are input multiplexes.

3. A space multiplex switch according to claim 1, characterized in that the sub-multiple (x) of the number of time slots of a frame differs from 1, that each frame is divided into sectors each comprising a number of time slots equal to said submultiple, that each memory (2, 3) is divided into as many zones (V1, Vx) as there are time slots in a sector, and in that each zone contains as many words (1, p) as there are input multiplexes, so as to carry out, in addition to a space switching, a time switching between all the time slots stored in each memory.

**Ansprüche**

1. Multiplex-Raumschalter, der eingangsseitig und ausgangsseitig mit einer gleichen Anzahl (p) von Zeitmultiplexleitungen verbunden ist, wobei die Multiplexe synchron und in Phase sind und gleiche Rahmen haben, die je eine gewisse Anzahl von Zeitkanälen aufweisen, mit einem Serien-Parallel-Wandler (1), der eingangsseitig mit den Eingangsmultiplexleitungen (E1 – Ep) verbunden ist, einem Wortspeicher, der eingangsseitig mit dem Serien-Parallel-Wandler verbunden ist, einem Parallel-Serien-Wandler (5), der eingangsseitig mit dem Wortspeicher und ausgangsseitig mit den Ausgangsmultiplexleitungen (S1 – Sp) verbunden ist, und einem Steuerspeicher (4), der eine Anzahl von Worten gleich dem Produkt der Anzahl (p) von Eingangsmultiplexleitungen mit der Anzahl (32) von Zeitkanälen eines Rahmens aufweist, wobei der Steuerspeicher das Lesen des Wortspeichers steuert, dadurch gekennzeichnet, daß der Wortspeicher aus zwei Speichern (2, 3) besteht, von denen einer sich im Schreibzustand befindet, wenn der andere im Lesezustand ist, daß jeder Speicher eingangsseitig mit dem Serien-Parallel-Wandler (1) und ausgangsseitig mit einem UND-Tor (8, 9) verbunden ist, das selbst mit einem ODER-Tor (10) verbunden ist, dessen Ausgang mit dem Parallel-Serien-Wandler (5) verbunden ist, daß jeder Speicher (2, 3) eine Anzahl von Worten gleich dem Produkt der Anzahl (p) von Eingangsmultiplexleitungen mit einem Untervielfachen (x) der Anzahl von Kanälen eines Rahmens aufweist, wobei das Untervielfache (x) geringer als die Anzahl von Kanälen eines Rahmens ist, daß die Schreib- und Lesezeiten (Ti) jedes Speichers gleich der Zeit sind, die einer Anzahl (x) von Zeitkanälen gleich dem genannten Untervielfachen entspricht, und daß der Steuerspeicher mit jedem der Speicher verbunden ist.

2. Multiplex-Raumschalter nach Anspruch 1, dadurch gekennzeichnet, daß jeder Speicher (2, 3) soviele Worte enthält, wie Eingangsmultiplexleitungen vorhanden sind.

3. Multiplex-Raumschalter nach Anspruch 1, dadurch gekennzeichnet, daß das Untervielfache (x) der Anzahl von Zeitkanälen eines Rahmens nicht 1 ist, daß jeder Rahmen in Sektoren aufgeteilt ist, die jeder eine Anzahl von Zeitkanälen gleich dem Untervielfachen aufweisen, daß jeder Speicher (2, 3) in soviele Zonen (V1, Vx) aufgeteilt ist, wie es Zeitkanäle in einem Sektor gibt, und daß jede Zone soviele Worte (1, p) aufweist, wie es Eingangsmultiplexleitungen gibt, so daß außer einer Raumdurchschaltung eine Zeitdurchschaltung zwischen allen in jedem Speicher gespeicherten Zeitkanälen durchgeführt wird.

FIG.1

# FIG.2

# FIG.3

FIG.4